(19) Europäisches Patentamt
European Patent Office
Office européen des brevets

(11) **EP 4 136 376 B1**

(12) **FASCICULE DE BREVET EUROPEEN**

(45) Date de publication et mention de la délivrance du brevet:
**04.12.2024 Bulletin 2024/49**

(21) Numéro de dépôt: **21725565.2**

(22) Date de dépôt: **14.04.2021**

(51) Classification Internationale des Brevets (IPC):
**F16L 9/19** *(2006.01)* **B33Y 80/00** *(2015.01)*
**F16L 59/14** *(2006.01)*

(52) Classification Coopérative des Brevets (CPC):
**F16L 9/19; F16L 9/006; F16L 59/141; B33Y 80/00**

(86) Numéro de dépôt international:
**PCT/FR2021/050656**

(87) Numéro de publication internationale:
**WO 2021/209717 (21.10.2021 Gazette 2021/42)**

(54) **CONDUITE D'ALIMENTATION DE TURBOPOMPE CRYOGENIQUE**

CRYOGENE TURBOPUMPEN-SPEISELEITUNG

CRYOGENIC TURBOPUMP FEED LINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2020 FR 2003841**

(43) Date de publication de la demande:
**22.02.2023 Bulletin 2023/08**

(73) Titulaire: **ArianeGroup SAS**
**78130 Les Mureaux (FR)**

(72) Inventeurs:
• **DURI, Davide**
**27207 VERNON CEDEX (FR)**
• **BACHELET, Charles-Hubert**
**27207 VRENON CEDEX (FR)**
• **BRIAL, Alexandre**
**27207 VERNON CEDEX (FR)**

(74) Mandataire: **Cabinet Beau de Loménie**
**158, rue de l'Université**
**75340 Paris Cedex 07 (FR)**

(56) Documents cités:
EP-A1- 2 730 831       CN-A- 106 885 067
DE-A1- 19 920 059      DE-U1- 20 316 589
US-A1- 2016 286 739    US-A1- 2019 211 949

## Description

Domaine Technique

La présente invention concerne une conduite d'alimentation de turbopompe cryogénique.

Technique antérieure

Dans le domaine des fusées à propulsion liquide, la propulsion est obtenue par la combustion d'ergols liquides. Les différents organes du moteur ont donc une température de fonctionnement proche de la température des ergols (20 K pour le LH2, 110 K pour le CH4, 900 K pour le LOx). La phase de mise en froid (en anglais, chilldown) consiste à amener les principaux organes du moteur de la température ambiante vers la température de fonctionnement nominal.

Plus spécifiquement, dans un système cryogénique de propulsion, la mise en froid peut avoir l'objectif d'éviter l'apparition d'au moins les phénomènes suivants :

- cavitation dans au moins une pompe d'alimentation en ergol cryogénique, entraînant une survitesse de la pompe et une chute de performance,
- fragilisation des matériaux à cause des chocs thermiques,
- perte d'étanchéité suite à des gradients thermiques non maîtrisés,
- échauffement et divergence de paliers, et
- déséquilibres statiques et/ou dynamiques de pièces rotatives, à cause de jeux dans les paliers.

La mise en froid peut ainsi être finalisée lorsque des critères fonctionnels sont atteints, par exemple des critères relatifs au jeu entre composants mécaniques, à la température des parois, à la tenue mécanique de composants des turbopompes ou à l'homogénéité du fluide.

Le fluide utilisé lors de la mise en froid est limité à cette utilisation. En particulier, lorsque l'ergol est utilisé pour la mise en froid, celui-ci ne peut pas être utilisé pour générer de la poussée, et la charge utile de la fusée est réduite. De plus, certains moteur sont réutilisables, ou présentent des évolutions rapides de température de fonctionnement, de sorte que la durée de la phase de transition thermique est une problématique critique pour l'amélioration des performances des moteurs et de la fusée.

En particulier, au début de la phase de mise en froid, lorsque l'écart de température est maximal entre les parois à température ambiante et l'ergol, l'ergol se vaporise en formant un film de gaz isolant la paroi du coeur liquide (ébullition en film), et le transfert thermique se produit de manière non favorable.

Dans certaines conduites d'alimentation, de nombreuses pièces supplémentaires ainsi que des revêtements (coating) sont utilisés pour réduire la durée du conditionnement thermique des pièces. Ces solutions complexifient la fabrication et l'assemblage des conduites soumises à une large plage de température, et le revêtement présente en outre un risque d'arrachement qui entraîne une pollution des circuits secondaires. Une telle conduite d'alimentation est montrée dans EP2730831 A1. Le document montre un appareil de canalisation pour cryogène liquide comprend un premier ensemble composé d'un premier tuyau ayant une première surface extérieure et un premier passage pour cryogène liquide, et un élément longitudinal s'étendant le long d'une partie de la première surface extérieure du premier tuyau ; un deuxième tuyau ayant un deuxième passage dimensionné et formé pour recevoir le premier ensemble à l'intérieur, le deuxième tuyau coagulant avec l'élément longitudinal pour fournir une paire de canaux dans le deuxième passage ; et un troisième tuyau ayant un troisième passage dimensionné et formé pour recevoir le deuxième tuyau à l'intérieur, le troisième tuyau étant à l'écart du deuxième tuyau.

Il existe donc un besoin pour une conduite d'alimentation de turbopompe cryogénique réduisant la durée de la mise en froid et réduisant la consommation d'ergol durant la mise en froid, et qui soit dépourvue, au moins en partie, des inconvénients des configurations connues précitées.

Exposé de l'invention

Le présent exposé concerne une conduite d'alimentation de turbopompe cryogénique, comprenant :

un canal principal apte à transporter un fluide cryogénique,
une pluralité de canaux secondaires parallèles à et disposés en périphérie d'un périmètre extérieur du canal principal.

Une telle conduite d'alimentation présente l'avantage de réduire le volume présent autour du canal principal, de sorte que la masse à amener à température lors de la mise en froid est d'autant plus réduite que les canaux sont nombreux et volumineux, tout en réduisant la conductance thermique entre le canal principal et une périphérie externe aux canaux secondaires. Cela permet d'utiliser une quantité réduite d'ergol pour mettre en température un volume réduit de matière limité à un proche voisinage du canal principal. De plus, les canaux secondaires permettent de concentrer l'ébullition en film en début de mise en froid aux dépens du canal principal, qui peut alors être refroidi par des échanges plus favorables.

Dans certains modes de réalisation, la pluralité de canaux secondaires sont disposés tout autour du canal principal. Autrement dit, la pluralité de canaux secondaires sont disposés sur toute la périphérie d'un périmètre extérieur du canal principal.

Dans certains modes de réalisation, la pluralité de canaux secondaires sont disposés de manière partielle autour du canal principal.

De manière partielle autour du canal principal doit être compris comme de manière à ce que les canaux secondaires soient disposés sur une ou plusieurs parties d'un contour autour du canal principal autrement dit sur un ou plusieurs tronçons du contour non-adjacents.

Autrement dit, la pluralité de canaux secondaires sont disposés sur un ou plusieurs contours partiels autour du canal principal. La pluralité de canaux secondaires peuvent alors être disposés sur une ou plusieurs parties de la périphérie d'un périmètre extérieur du canal principal. Dans la suite de la description de cette invention, les termes « contour partiel » et « partie d'un contour » ont la même signification.

Dans certains modes de réalisation, la pluralité de canaux secondaires sont disposés sur une pluralité de canaux secondaires non adjacents.

Dans certains modes de réalisation, vu d'une section transversale de la conduite, au moins une partie d'un contour passant par les centres de la pluralité de canaux secondaires peut présenter un rapport R entre la longueur du contour ne traversant pas un canal secondaire par la longueur totale L du contour inférieur à 40%, de préférence inférieur à 25%.

Par contour est compris un contour complet, c'est-à-dire une délimitation définissant une partie intérieure et une partie extérieure au contour. Dans le cas de la conduite d'alimentation, la partie intérieure comprend le canal principal. Une partie d'un contour correspond à un tronçon d'un contour, c'est-à-dire un élément d'un contour présentant au moins deux extrémités distinctes et non jointes.

Les échanges thermiques à travers et entre les canaux secondaires étant de plus faible amplitude que les échanges radiaux à travers les espaces entre les canaux secondaires ; le rapport est assimilable au rapport entre la surface d'échange en présence de canaux secondaires, et la surface d'échange si les canaux secondaires n'étaient pas présents, ce qui revient approximativement au rapport de la conductance thermique entre une périphérie radialement intérieure et une périphérie radialement extérieure aux canaux secondaire en présence de canaux secondaires par la même conductance thermique en l'absence de canaux secondaires.

Dans certains modes de réalisation, les canaux secondaires peuvent être discontinus.

Les canaux secondaires peuvent ainsi jouer le rôle de « bras morts », dans lesquels le fluide cryogénique peut pénétrer et s'établir.

Dans certains modes de réalisation, la conduite peut présenter des orifices radiaux de connexion entre les canaux primaire et secondaires.

Ces orifices permettent de faciliter l'alimentation des canaux secondaires en fluide à partir du canal primaire, tout limitant la circulation du fluide à travers les canaux secondaires, et de faciliter des opérations de nettoyage ou de maintenance sur la conduite, par exemple la purge de résidus de matière après fabrication ou la purge de l'ergol résiduel après utilisation.

Dans certains modes de réalisation, la pluralité de canaux secondaires peut être débouchante sur l'une au moins d'une extrémité amont et d'une extrémité aval de la conduite.

Cette structure permet d'alimenter la pluralité de canaux secondaires en fluide et de faciliter le nettoyage des canaux secondaires.

Dans certains modes de réalisation, le canal principal et la pluralité de canaux secondaires peuvent être séparés par une bande d'épaisseur inférieure à 3 mm, de préférence inférieure à 2 mm.

Un tel dimensionnement permet de préserver l'intégrité structurelle de la conduite tout en limitant la matière présente dans un voisinage direct de la conduite.

Dans certains modes de réalisation, les canaux secondaires peuvent avoir une section transversale sensiblement circulaire.

La forme circulaire est préférentielle pour minimiser le périmètre du canal principal, et donc la surface d'échange, pour une aire de section de canal principal donnée.

Dans certains modes de réalisation, une section transversale du canal principal peut présenter une surface entre 50 mm$^2$ et 700 mm$^2$, de préférence entre 75 mm$^2$ et 450 mm$^2$, perpendiculairement à une direction d'écoulement.

Dans certains modes de réalisation, un écart entre deux canaux secondaires successifs à proximité d'un élément du périmètre de la du canal principal ne présentant pas d'arête peut être inférieur à 3 mm, de préférence 2 mm.

Un tel dimensionnement permet de préserver l'intégrité structurelle de la conduite tout en réduisant la conductance thermique.

Dans certains modes de réalisation, le canal principal peut avoir une section transversale sensiblement circulaire.

Dans un deuxième mode de réalisation, le canal principal peut avoir une section transversale en forme de goutte d'eau, présentant une base ayant sensiblement une forme d'arc de cercle présentant deux extrémités desquelles s'étendent deux segments se rejoignant.

La forme en goutte permet de faciliter la fabrication par méthode additives en réduisant les angles de matière en aplomb (overhang) et limitant ainsi le risque d'effondrement lors de la fabrication.

Dans certains modes de réalisation, un matériau isolant peut être prévu dans les canaux secondaires.

Le matériau isolant permet de limiter les risques de pollution à travers la conduite, par exemple en prévenant le passage de particules détachables à travers les canaux secondaires.

Dans certains modes de réalisation, le matériau isolant est une résine époxy spéciale pour applications cryogéniques.

Le présent exposé concerne également un procédé de fabrication de la conduite d'alimentation, le procédé présentant au moins une étape de fabrication par une méthode de fabrication additive.

Brève description des dessins

Les dessins annexés sont schématiques et visent avant tout à illustrer les principes de l'exposé.

Sur ces dessins, d'une figure à l'autre, des éléments (ou parties d'élément) identiques sont repérés par les mêmes signes de référence. En outre, des éléments (ou parties d'élément) appartenant à un exemple de réalisation différent mais ayant une fonction analogue sont repérés sur les figures par des références numériques incrémentées de 100, 200, 300, 400, 500.

[Fig. 1] La figure 1 est une vue schématique d'un lanceur spatial,

[Fig. 2] la figure 2 est une vue en perspective isométrique d'une conduite du lanceur spatial de la figure 1,

[Fig. 3] la figure 3 est une vue selon une coupe transversale de la conduite de la figure 2,

[Fig. 4A] la figure 4A est un premier exemple d'une vue d'une coupe axiale de la conduite,

[Fig. 4B] la figure 4B est un deuxième exemple d'une vue d'une coupe axiale de la conduite,

[Fig. 5A] la figure 5A est une vue d'une coupe de la conduite selon l'axe B-B de la figure 3, lors de la mise en froid,

[Fig. 5B] la figure 5B correspond à la figure 5A à un instant postérieur de la mise en froid,

[Fig. 5C] la figure 5C correspond aux figures 5A et 5B à un instant encore postérieur de la mise en froid,

[Fig. 5D] la figure 5D correspond à une fin de mise en froid dans le cas de la conduite du premier exemple,

[Fig. 6] la figure 6 est une vue en perspective isométrique d'une conduite selon un deuxième mode de réalisation,

[Fig. 7] la figure 7 est une vue schématique selon une coupe transversale de la conduite de la figure 6.

[Fig. 8A] la figure 8A est une vue selon une coupe transversale d'une conduite selon un troisième mode de réalisation.

[Fig. 8B] la figure 8B est une vue selon une coupe transversale d'une conduite selon une alternative du troisième mode de réalisation.

[Fig. 9] la figure 9 est une vue selon une coupe transversale d'une conduite selon un quatrième mode de réalisation.

[Fig. 10] la figure 10 est une vue selon une coupe transversale d'une conduite selon un cinquième mode de réalisation.

[Fig. 11] la figure 11 est une vue selon une coupe transversale d'une conduite selon un sixième mode de réalisation.

Description des modes de réalisation

Dans le présent exposé, les termes « axial », « radial », « intérieur », « extérieur » et leurs dérivés sont définis par rapport à l'axe principal de la conduite ; on entend par « plan axial » un plan passant par l'axe principal de la conduite et par « plan radial » un plan perpendiculaire à cet axe principal ; enfin, les termes « amont » et « aval » sont définis par rapport à la direction circulation de fluide dans la conduite.

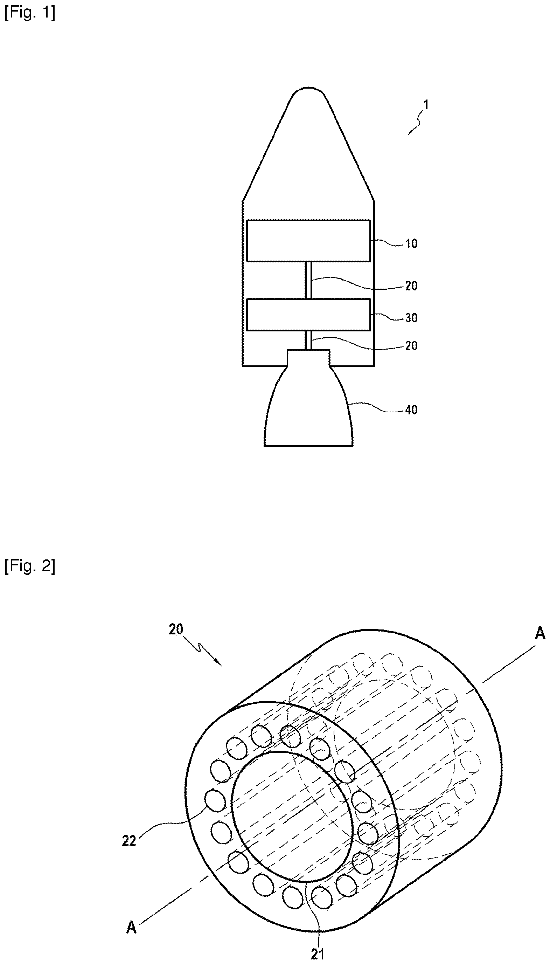

La figure 1 représente schématiquement une fusée 1 comprenant au moins un réservoir 10, au moins une turbopompe 30 et au moins un moteur-fusée 40 communiquant au moyen de conduites 20. Le réservoir 10 contient un ergol amené au moteur-fusée 40 au moyen de la turbopompe 30 et des conduites 20.

La température de fonctionnement des turbopompes 30 est proche de la température des ergols, et est par exemple d'environ 20 K (Kelvin) pour le dihydrogène liquide (LH2), 110 K pour le méthane (CH4) et 90 K pour l'oxygène.

Une représentation schématique selon une vue en perspective de la conduite 20 est présentée sur la figure 2.

La conduite 20 peut être réalisée en alliage adapté aux utilisations cryogéniques, par exemple en Inconel 718. Le matériau de la conduite 20 est ci-après désigné par « le matériau de la conduite » ou « le matériau interstitiel ».

La conduite 20 présente un axe principal A-A s'étendant dans la direction principale de la conduite 20.

La conduite 20 comprend un canal principal 21, dans lequel l'ergol peut circuler.

Une pluralité de canaux secondaires 22 sont disposés autour du canal principal 21, parallèlement au canal principal 21.

Par exemple, les canaux secondaires peuvent être au nombre de 10 à 30.

Il est avantageux qu'une section transversale de la conduite 20 soit identique le long de l'axe principal A-A, par exemple pour limiter les pertes de charge et/ou la conduction thermique vers l'extérieur de la conduite 20. Toutefois, la présente invention n'est pas limitée à ce mode de réalisation, et les formes et dimensions peuvent varier, par exemple en présence d'un coude.

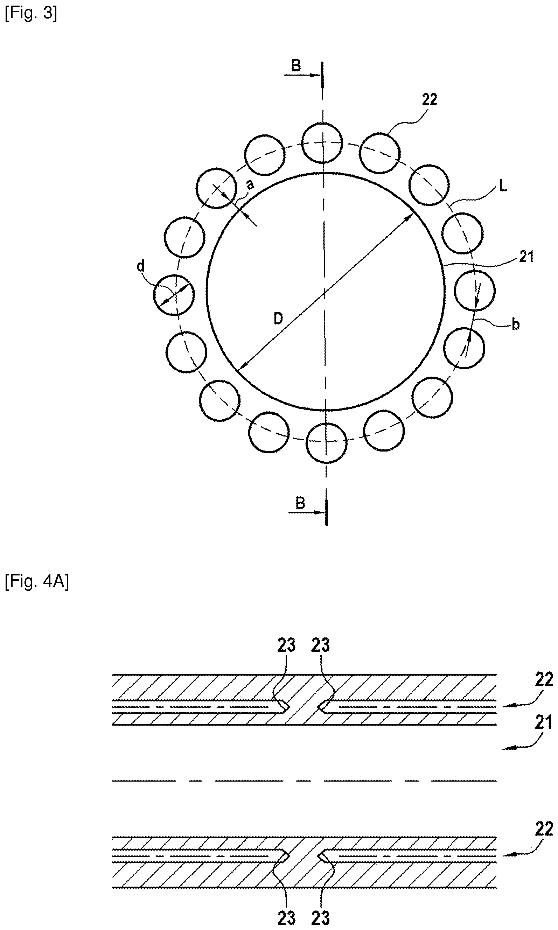

La figure 3 présente un exemple de section transversale de la conduite 20 selon un plan radial.

Le canal principal 21 et la pluralité de canaux secondaires 22 ont des sections transversales de formes sensiblement circulaires. Les canaux secondaires 22 sont disposés en périphérie du canal principal 21.

En particulier, dans une vue en coupe transversale, les centres des canaux secondaires sont disposés sur un cercle concentrique au contour extérieur circulaire du canal principal 21, le cercle représenté en trait discontinu.

Le canal principal 21 a un diamètre D, et les canaux secondaires ont un diamètre d, inférieur au diamètre D.

La disposition des canaux secondaires 22 autour d'un périmètre extérieur du canal principal 21 est telle que les canaux secondaires 22 n'intersectent pas le canal principal 21. Ainsi, peut être définie une distance entre un point d'une périphérie d'un canal secondaire 22 et un point d'une périphérie du canal principal 2. En particulier, cette distance atteint un minimum entre le point d'un canal secondaire 22 le plus proche du centre du canal principal 21 et le point du canal secondaire 22 en regard direct, situé sur une même plan radial, correspondant à la distance a représentée sur la figure 3.

Autrement dit, dans le cas présent de canaux 21, 22 circulaires et vus dans une section transversale, une couronne est définie entre le contour extérieur du canal principal 21 et le plus petit cercle concentrique et tangent aux canaux secondaires 22, cette couronne présentant une épaisseur a.

Le cercle passant par les centres des canaux secondaires a donc un périmètre L tel que :

$$[\text{Math. 1}] \; L = 2\pi(D/2+a+d/2)$$

Les canaux secondaires 22 sont disjoints, et le cercle passant par les centres des canaux secondaires 22 traverse successivement les canaux secondaires 22 et le matériau interstitiel de la conduite 20. Un rapport R est défini, correspondant au ratio du périmètre de ce cercle qui traverse le matériau interstitiel de la conduite 20. Autrement dit, le rapport R est le rapport de la somme totale des distances b entre les contours des canaux secondaires 22 en parcourant le cercle, divisé par le périmètre L du cercle. Cet écart b entre deux canaux secondaires 22 successifs est inférieur à 3 mm, de préférence inférieur à 2 mm.

Dans le cas où le nombre de canaux secondaires est supérieur à 10, la distance b entre deux canaux secondaires 22 en parcourant le cercle est assimilable à la distance entre les périmètres des canaux secondaires 22.

Les dimensions de la conduite sont telles que le rapport R est inférieur à 40%, de préférence inférieur à 25%.

La conductance thermique à travers le matériau interstitiel de la conduite 20 étant environ deux ordres de grandeur plus importante que la conductance à travers les canaux secondaires comprenant un mélange gazeux, cette diminution du rapport R permet de réduire la conductance thermique entre le canal principal 21 et l'extérieur de la conduite 20. En particulier, du fait des ordres de grandeurs de conductance, la conductance thermique entre le canal principal 21 et l'extérieur de la conduite 20 est assimilable à la conductance thermique à travers le matériau interstitiel de la conduite 20. Dès lors, la conductance thermique est proportionnelle au rapport R, de sorte qu'un rapport R de 25% divise par 4 la résistance thermique de la conduite 20, ce qui permet de réduire la masse à mettre en froid, diminuant ainsi la durée de mise en froid ainsi que la quantité d'ergol consommée pour la mise en froid.

La section transversale du canal principal 21 présente une surface entre 50 mm$^2$ et 700 mm$^2$, de préférence entre 75 mm$^2$ et 450 mm$^2$. En particulier, dans le cas d'une section circulaire, cela correspond à un diamètre du canal principal 21 environ compris entre 8 mm et 30 mm, de préférence entre 10 mm et 24 mm.

L'épaisseur a de la couronne est inférieure à 3 mm, de préférence inférieure à 2 mm.

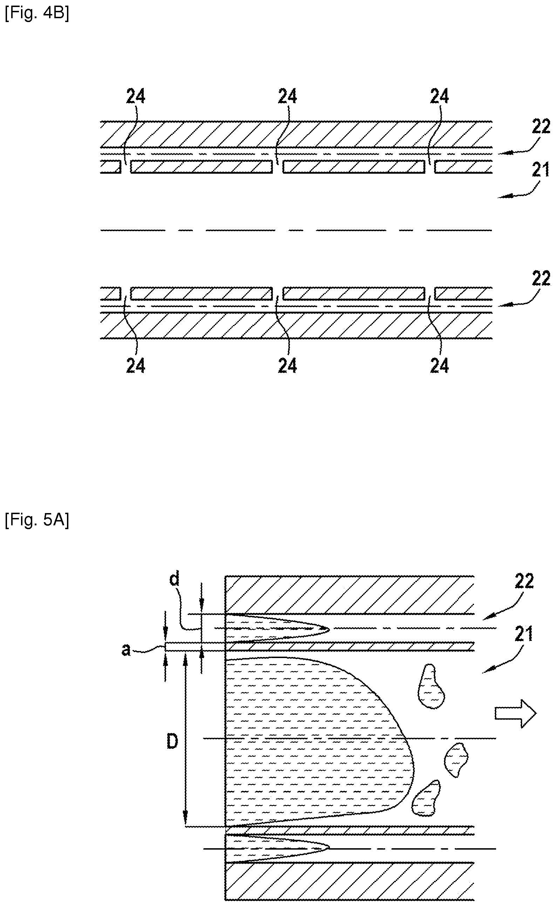

Trois exemples de mise en oeuvre des canaux secondaires seront décrits relativement aux figures 4A et 4B, représentant des coupes selon un plan axial dont une intersection avec le plan radial de la figure 3 est représentée par l'axe B-B.

La figure 4A est une représentation schématique de la conduite 20, dans laquelle les canaux secondaires 22 sont discontinus, et présentent un espace interstitiel 23 entre deux canaux successifs situés sur un même axe. Cet espace interstitiel 23 empêche la communication entre deux canaux secondaires 22 d'un même axe.

Comme représenté sur la figure 4A, les canaux secondaires 22 peuvent également être débouchants sur l'une au moins d'une extrémité amont et d'une extrémité aval de la conduite 20, permettant ainsi l'entrée de l'ergol dans une partie des canaux secondaires 22.

La figure 4B est une représentation schématique de la conduite 20, dans laquelle une pluralité d'orifices radiaux 24 sont prévus entre le canal principal 21 et les conduits secondaires 22 afin de permettre la circulation du fluide entre les canaux principal 21 et secondaires 22.

Ces trois exemples de mise en oeuvre sont compatibles, et peuvent être mis en place indépendamment les uns des autres.

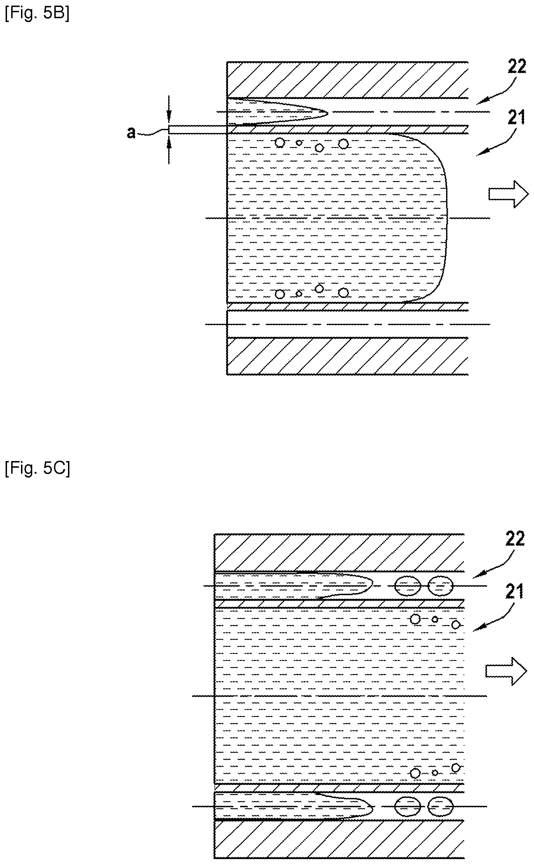

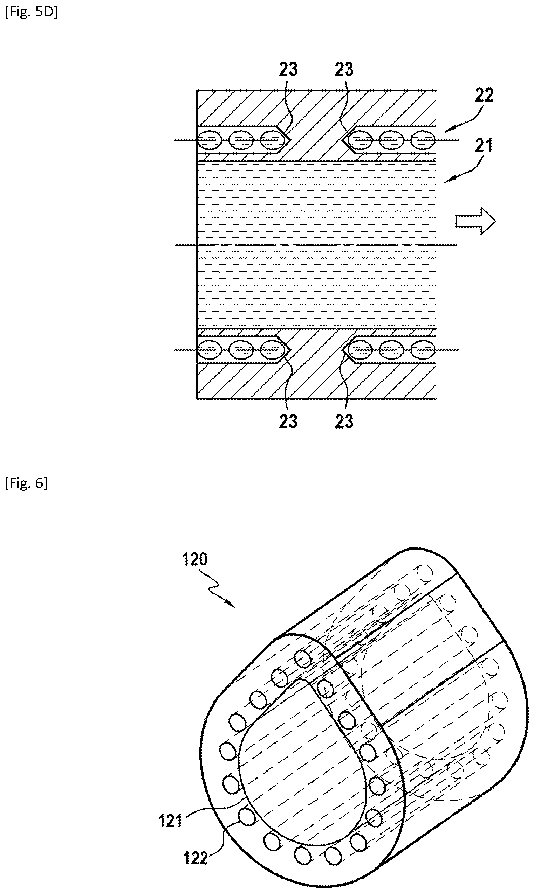

En particulier, si l'un au moins des trois exemples de mise en oeuvre est utilisé, l'ergol peut emplir les canaux secondaires 22. Un tel exemple de section axiale de conduite 20 est décrit relativement aux figures 5A, 5B et 5C présentant dans cet ordre trois phases successives de mise en froid, ainsi que la figure 5D présentant une fin de mise en froid dans le cas d'une conduite présentant des canaux secondaires 22 avec des espaces interstitiels 23. L'ergol liquide est représenté par un motif de remplissage avec des tirets, tandis que le matériau interstitiel de la conduite 20 est représenté par un motif de traits continus diagonaux. Une phase gazeuse est représentée par une surface unie. Une flèche représente le sens de circulation de l'ergol vers la partie aval.

La figure 5A représente une première phase de mise en froid, dans laquelle le liquide vient de pénétrer les canaux principal 21 et secondaires 22. Le gradient de température est élevé, les surfaces des canaux étant encore chaudes comparativement à la température cryogénique de l'ergol. Une couche de vapeur non favorable aux échanges thermiques se forme alors entre les canaux et l'ergol, tandis qu'une partie aval de l'ergol se fragmente en gouttes.

Par la suite, comme représenté dans les figures 5B et 5C, la présence de l'ergol dans les canaux secondaires 22 permet d'accélérer la mise en température de la couronne située entre le canal principal 21 et les canaux secondaires 22, ce qui diminue l'écart de température entre les canaux et le fluide, et permet ainsi la propagation du front liquide sur toute la longueur de la conduite 20.

En particulier, dans l'exemple de la figure 5D, les canaux secondaires 22 peuvent être emplis d'ergol tandis que les espaces interstitiels 23 empêchent la circulation de l'ergol sur toute la longueur des canaux secondaires 22, qui jouent alors le rôle de « bras morts » dans lesquels l'ergol va stagner et progressivement se vaporiser.. Cela permet de faciliter le refroidissement autour des canaux secondaires 22, mais aussi d'assurer l'isolation thermique du canal principal 21 lorsque l'ergol contenu dans les canaux secondaires 22 est vaporisé. L'ergol peut alors circuler dans le canal principal 21 en restant majoritairement en phase liquide, ce qui correspond à la fin de la mise en froid.

Les canaux secondaires 22 peuvent également être remplis d'un matériau isolant, par exemple une résine époxy spéciale pour applications cryogéniques.

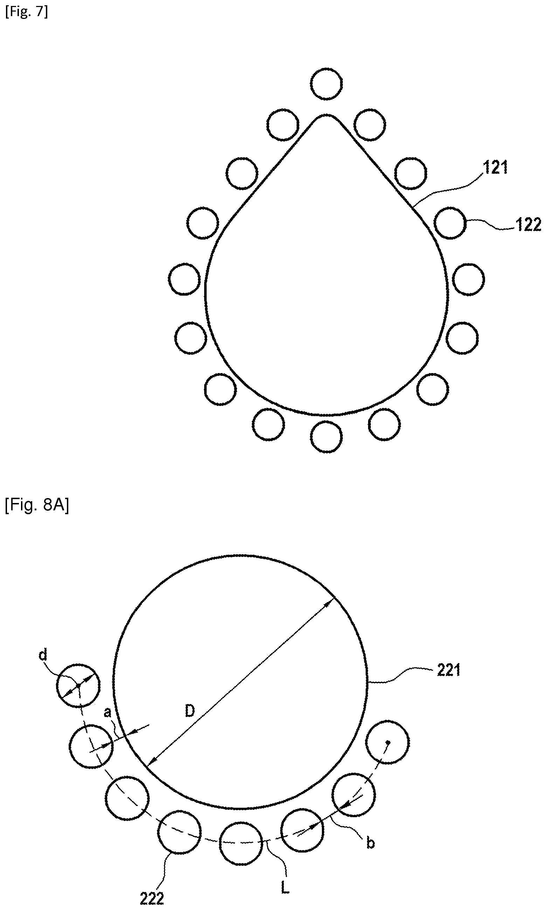

Un deuxième mode de réalisation de conduite est présenté relativement aux figures 6 et 7.

La figure 6 est une vue en perspective d'une conduite 120 dans laquelle le canal principal 121 a une section transversale en forme de goutte d'eau, c'est-à-dire présentant une basse ayant une forme sensiblement d'arc de cercle aux extrémités desquelles sont disposés deux segments se rejoignant.

Des canaux secondaires 122 de forme circulaire sont disposés de sorte que leurs centres sont situés sur un contour ayant une forme semblable à la forme du canal principal 121.

Le rapport R est alors défini le long du contour passant par les centres des canaux secondaires 122, tandis qu'une section transversale de la conduite 120 présente un bandeau d'épaisseur a entre les canaux principal 121 et secondaires 122.

La conduite 20, 120 peut être mise en oeuvre par des méthodes de fabrication additive.

En particulier, la forme de goutte permet de faciliter la mise en oeuvre par des méthodes de fusions sur lit de poudre, tandis que les communications entre les canaux 121, 122 ainsi que les canaux secondaires 122 débouchants permettent de faciliter l'évacuation des poudres résiduelles.

Dans le premier et le deuxième mode de réalisation de conduite, les canaux secondaires 22, 122 ont été représentés tout autour du périmètre extérieur du canal principal 21, 121.

Un troisième mode de réalisation de conduite va être décrit relativement aux figures 8A à 8B.

Le troisième mode de réalisation est une modification du premier mode de réalisation, et les éléments communs ne seront pas à nouveau décrits.

La conduite 220 du troisième mode de réalisation diffère de la conduite 20 du premier mode de réalisation en ce que les canaux secondaires 222 sont disposés en périphérie d'un périmètre extérieur du canal principal, sur un contour partiel autour du canal principal.

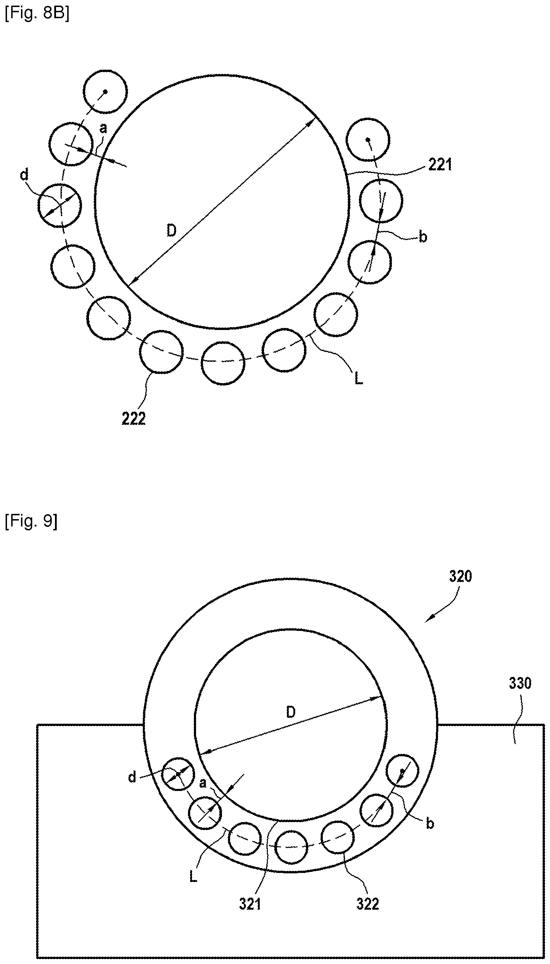

Comme représenté sur les figures 8A et 8B, la conduite 220 présente la même disposition de canaux secondaires 222 que la conduite 20 des figures 2 et 3 sur une moitié inférieure de la conduite 220, tandis que la moitié supérieure ne présente pas de canaux secondaires 222.

Sur le contour partiel présentant les canaux secondaires 222, les canaux secondaires 222 peuvent alors jouer le rôle d'isolation thermique du canal principal 221 tel que décrit précédemment. Cette fonction d'isolation thermique est maintenue sur tout le contour partiel des canaux secondaires 222.

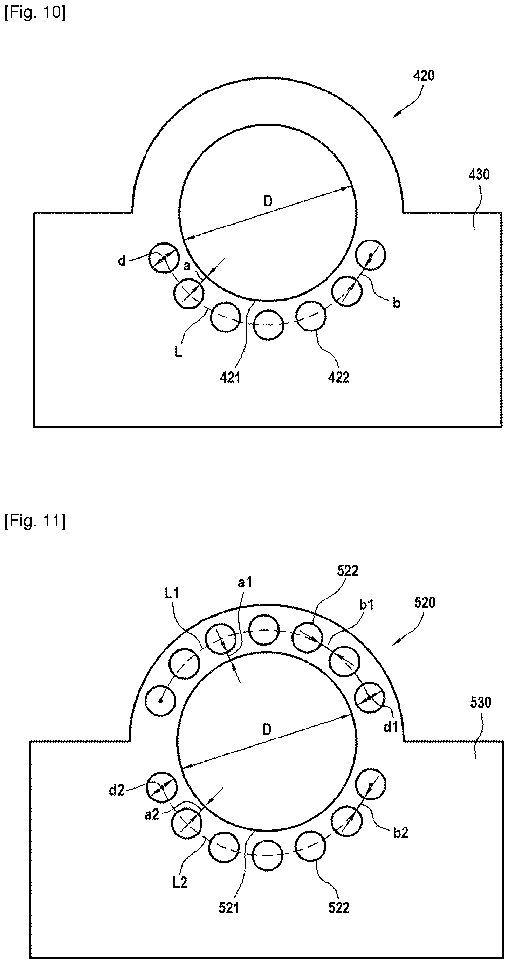

Une telle disposition permet d'ajuster localement les performances thermomécaniques de la conduite, ce qui sera décrit plus en détail relativement aux modes de réalisation des figures 9 et 10.

On comprend que la définition de la longueur L du contour et la définition du rapport R définies ci-avant pour un contour entier sont généralisables à la disposition de canaux secondaires 222 sur un contour partiel.

La partie d'un contour considérée est alors la partie d'un contour située entre les centres des canaux secondaires 222 situés aux extrémités du contour partiel, et passant par les centres des canaux secondaires 222 situés entre les centres des canaux secondaires 222 des extrémités du contour partiel.

La longueur L du contour partiel est représentée sur les vues en coupe des figures 8A et 8B.

La figure 8B représente une vue en coupe transversale selon une alternative à la conduite de la figure 8A, dans lequel le contour partiel sur lequel sont disposés les canaux secondaires 222 est plus long, et présente un nombre de canaux secondaires 222 plus important.

On notera que les alternatives des figures 8A et 8B correspondent à la conduite de la figure 3 dans lesquelles certains canaux secondaires 222 ont été retirés et les autres canaux secondaires 222 ont été maintenus à la même position.

De ce fait, les dimensions a, b, d, et D étant identiques, le rapport R est le même pour les alternatives des figures 3, 8A et 8B, car la variation de la longueur L entre ces alternatives est compensée par la variation du nombre de canaux secondaires.

On comprend qu'une conduite peut présenter des canaux secondaires disposés sur plus d'une partie d'un contour. Deux parties d'un contour distinctes et non-adjacentes se caractérisent lorsque deux canaux secondaires successifs présentent un écart au moins supérieure au triple, de préférence au double de l'écart b entre deux canaux secondaires successifs d'une même partie d'un contour. Dans le cas où les écarts b sont différents, le critère de distinction de deux parties d'un contour distinctes et non-adjacentes peut être basé sur l'écart minimum, l'écart maximum, l'écart médian ou l'écart moyen entre deux canaux secondaires successifs.

On comprend que la définition de longueur L du contour et la définition du rapport R associé sont également généralisables à une conduite présentant des canaux secondaires formés sur plusieurs parties d'un contour distinctes et non-adjacentes, en définissant une longueur de contour partiel et un rapport partiel pour chacun des contours partiels de la conduite.

Un exemple de conduite présentant une pluralité de contours partiels sera décrit relativement à la figure 11.

On comprend que la définition de longueur L du contour et la définition du rapport R associé sont également généralisables à une conduite présentant des canaux secondaires formés sur plusieurs parties d'un contour distinctes et non-adjacentes, en définissant une longueur de contour partiel et un rapport partiel pour chacun des contours partiels de la conduite.

Les figures 9 et 10 présentent respectivement un quatrième et un cinquième mode de réalisation d'une conduite.

Dans le quatrième mode de réalisation de la figure 9, la conduite 320 est montée contre un volume 330. Ce mode de réalisation peut être mis en oeuvre par exemple pour limiter l'espace occupé par la conduite ou selon un autre exemple pour améliorer sa stabilité ou pour les deux en même temps.

Du fait de la présence du volume 330, l'inertie thermique est localement augmentée à proximité du canal principal 321 de la conduite 320, ce qui entraîne une consommation plus importante d'ergol pour la mise en froid de la conduite 320. Par ailleurs, la présence de canaux secondaires 322 à proximité des interfaces entre les parties de la conduite 320 externes au volume 330 et celles intégrées au volume 330 peut fragiliser la conduite 320 soumise à de fortes contraintes thermomécaniques lors de la phase de mise en froid.

En réponse à cette augmentation de l'inertie thermique, des canaux secondaires 322 peuvent alors être positionnés sur un contour partiel, correspondant à des positions situées dans un voisinage du volume 330.

Cette disposition de canaux secondaires 322 permet d'améliorer les performances thermiques de la conduite 320 à proximité du volume 330, tout en maintenant des performances mécaniques satisfaisantes en ne disposant pas de canaux secondaires 322 à des positions de la conduite 320 éloignées des interfaces entre les parties de la conduite 320 externes au volume 330 et les parties de la conduite 320 intégrées au volume 330.

Une telle disposition permet alors d'améliorer le comportement thermique de la conduite 320 en adaptant localement la durée en mise en froid. Cela permet également d'homogénéiser la mise en froid de la conduite 320.

Dans le cinquième mode de réalisation de la figure 10, un volume 430 additionnel est prévu. Ce mode de réalisation diffère du quatrième mode de réalisation en ce que le volume 430 fait partie de la conduite 420.

Similairement au quatrième mode de réalisation de la figure 9, les canaux secondaires 422 sont disposés à proximité d'un volume 430.

Les volumes 330, 430 sont décrits comme des ajouts de matière externes ou internes à la conduite 320, 420, entraînant une augmentation de l'inertie thermique à proximité du canal principal 321, 421. On comprendra que les volumes 330, 430 désignent par extension tout élément entraînant une dégradation des performances thermiques de la conduite, comprenant mais non limité à un changement local de matériau ; ou la présence d'une source de chaleur telle qu'un câble électronique.

Le sixième mode de réalisation de la figure 11 correspond au mode de réalisation de la figure 10, présentant un contour partiel supplémentaire à des positions éloignées du volume 530.

L'ajout d'un contour partiel supplémentaire permet notamment d'améliorer le comportement thermique de la conduite 520 à une position éloignée du volume 530.

Comme pour le mode de réalisation de la figure 8 et de la figure 9, la conduite 520 ne présente pas de canaux secondaires 522 à des positions d'un contour de la conduite 520 situées aux interfaces entre les parties de la conduite 520 externes au volume 530 et les parties de la conduite intégrés au volume 530.

L'absence de canaux secondaires 522 à ces positions permet alors d'y renforcer mécaniquement la conduite 520,

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Notamment, les caractéristiques décrites ci-dessus ne sont pas limitées à une conduite de forme circulaire, mais sont également compatibles avec toute autre forme de conduite, par exemple avec une conduite en forme de goutte d'eau telle que décrite ci-dessus.

En outre, le sixième mode de réalisation de la figure 11 présente deux contours partiels, pour lesquels les paramètres R, L, a, b, d ont été différenciés et indexés en R1, L1, a1, b1, d1 et R2, L2, a2, b2, d2 respectivement. On comprend en effet que chaque contour partiel peut être dimensionné de manière indépendante.

## Revendications

1. Conduite d'alimentation (20, 120, 220, 320) de turbopompe cryogénique, comprenant :

   un canal principal (21, 121, 221, 321) apte à transporter un fluide cryogénique,
   une pluralité de canaux secondaires (22, 122, 222, 322) parallèles à et disposés en périphérie d'un périmètre extérieur du canal principal (21, 121, 221, 321) et qui sont discontinus.

2. Conduite d'alimentation (20, 120) de turbopompe cryogénique selon la revendication 1, dans laquelle la pluralité de canaux secondaires (22, 122) sont disposés tout autour du canal principal (21, 121).

3. Conduite d'alimentation (220, 320) de turbopompe cryogénique selon la revendication 1, dans laquelle la pluralité de canaux secondaires (222, 322) sont disposés de manière partielle autour du canal principal (221, 321).

4. Conduite d'alimentation suivant l'une quelconque des revendications 1 à 3, dans laquelle, en section transversale, au moins une partie d'un contour passant par les centres de la pluralité de canaux secondaires (22, 122) présente un rapport (R) entre la longueur de la au moins une partie du contour ne traversant pas un canal secondaire par la longueur totale (L) de la au moins une partie du contour inférieur à 40%, de préférence inférieur à 25%.

5. Conduite d'alimentation suivant l'une quelconque des revendications 1 à 4 présentant des orifices radiaux (24) de connexion entre les canaux primaire (21, 121) et secondaires (22, 122).

6. Conduite d'alimentation suivant l'une quelconque des revendications 1 à 5 dans laquelle la pluralité de canaux secondaires (22, 122) est débouchante sur l'une au moins d'une extrémité amont et d'une extrémité aval de la conduite (20, 120).

7. Conduite d'alimentation suivant l'une quelconque des revendications 1 à 6 dans laquelle le canal principal (21, 121) et la pluralité de canaux secondaires (22, 122) sont séparés par une bande d'épaisseur (a) inférieure à 3 mm, de préférence inférieure à 2 mm.

8. Conduite d'alimentation suivant l'un quelconque des revendications 1 à 7, dans laquelle les canaux secondaires (22, 122) ont une section transversale sensiblement circulaire.

9. Conduite d'alimentation suivant l'une quelconque des revendications 1 à 8, dans laquelle une section transversale du canal principal (21, 121) présente une surface entre 50 mm$^2$ et 700 mm$^2$, de préférence entre 75 mm$^2$ et 450 mm$^2$, perpendiculairement à une direction d'écoulement.

10. Conduite d'alimentation suivant l'une quelconque des revendications 1 à 9, dans laquelle un écart (b) entre deux canaux secondaires (22, 122) successifs à proximité d'un élément d'un contour du canal principal (21, 121) ne présentant pas d'arête est inférieur à 3 mm, de préférence 2 mm.

11. Conduite d'alimentation suivant l'une quelconque des revendications 1 à 10, dans laquelle le canal principal (21) a une section transversale sensiblement circulaire.

12. Conduite d'alimentation suivant l'une quelconque des revendications 1 à 11, dans laquelle le canal principal (121) a une section transversale en forme de goutte d'eau, présentant une base ayant sensiblement une forme d'arc de cercle présentant deux extrémités desquelles s'étendent deux segments se rejoignant.

13. Conduite d'alimentation suivant l'une quelconque des revendications 1 à 12 dans laquelle un matériau isolant est prévu dans les canaux secondaires (22, 122).

14. Conduite d'alimentation suivant la revendication 13 dans laquelle le matériau isolant est une résine époxy spéciale pour applications cryogéniques.

15. Procédé de fabrication de la conduite d'alimentation suivant l'une quelconque des revendications 1 à 14, présentant au moins une étape de fabrication par une méthode de fabrication additive.

## Patentansprüche

1. Kryogene Turbopumpen-Speiseleitung (20, 120, 220, 320), umfassend:

   einen Hauptkanal (21, 121, 221, 321), der imstande ist, ein kryogenes Fluid zu transportieren,
eine Vielzahl von Sekundärkanälen (22, 122, 222, 322), die parallel zu und an der Peripherie eines äußeren Umkreises des Hauptkanals (21, 121, 221, 321) angeordnet sind und die diskontinuierlich sind.

2. Speiseleitung (20, 120) einer kryogenen Turbopumpe nach Anspruch 1, wobei die Vielzahl von Sekundärkanälen (22, 122) um den ganzen Hauptkanal (21, 121) herum angeordnet sind.

3. Speiseleitung (220, 320) einer kryogenen Turbopumpe nach Anspruch 1, wobei die Vielzahl von Sekundärkanälen (222, 322) teilweise um den Hauptkanal (221, 321) herum angeordnet sind.

4. Speiseleitung nach einem der Ansprüche 1 bis 3, wobei im Querschnitt mindestens ein Teil einer durch die Mittelpunkte der Vielzahl von Sekundärkanälen (22, 122) verlaufenden Kontur ein Verhältnis (R) zwischen der Länge des mindestens einen Teils der Kontur, der keinen Sekundärkanal durchläuft, zur Gesamtlänge (L) des mindestens einen Teils der Kontur von weniger als 40 %, vorzugsweise weniger als 25 %, aufweist.

5. Speiseleitung nach einem der Ansprüche 1 bis 4, die radiale Öffnungen (24) zur Verbindung zwischen dem Primärkanal (21, 121) und dem Sekundärkanal (22, 122) aufweist.

6. Speiseleitung nach einem der Ansprüche 1 bis 5, wobei die Vielzahl von Sekundärkanälen (22, 122) an mindestens einem von einem stromaufwärtigen Ende und einem stromabwärtigen Ende der Leitung (20, 120) ausmündet.

7. Speiseleitung nach einem der Ansprüche 1 bis 6, wobei der Hauptkanal (21, 121) und die Vielzahl von Sekundärkanälen (22, 122) durch ein Band mit einer Dicke (a) von weniger als 3 mm, vorzugsweise weniger als 2 mm, getrennt sind.

8. Speiseleitung nach einem der Ansprüche 1 bis 7, wobei die Sekundärkanäle (22, 122) einen im Wesentlichen kreisförmigen Querschnitt haben.

9. Speiseleitung nach einem der Ansprüche 1 bis 8, wobei ein Querschnitt des Hauptkanals (21, 121) eine Fläche zwischen 50 mm$^2$ und 700 mm$^2$, vorzugsweise zwischen 75 mm$^2$ und 450 mm$^2$, senkrecht zu einer Strömungsrichtung aufweist.

10. Speiseleitung nach einem der Ansprüche 1 bis 9, wobei ein Abstand (b) zwischen zwei aufeinanderfolgenden Sekundärkanälen (22, 122) in der Nähe eines Elements einer Kontur des Hauptkanals (21, 121), das keine Kante aufweist, weniger als 3 mm, vorzugsweise 2 mm, beträgt.

11. Speiseleitung nach einem der Ansprüche 1 bis 10, wobei der Hauptkanal (21) einen im Wesentlichen kreisförmigen Querschnitt hat.

12. Speiseleitung nach einem der Ansprüche 1 bis 11, wobei der Hauptkanal (121) einen tropfenförmigen Querschnitt hat, der eine im Wesentlichen kreisbogenförmige Basis mit zwei Enden aufweist, von denen sich zwei zusammenlaufende Segmente erstrecken.

13. Speiseleitung nach einem der Ansprüche 1 bis 12, wobei in den Sekundärkanälen (22, 122) Isoliermaterial vorgesehen ist.

14. Speiseleitung nach Anspruch 13, wobei das Isoliermaterial ein spezielles Epoxidharz für kryogene Anwendungen ist.

15. Verfahren zur Herstellung der Speiseleitung nach einem der Ansprüche 1 bis 14, das mindestens einen Herstellungsschritt durch ein additives Fertigungsverfahren aufweist.

**Claims**

1. A cryogenic turbopump feed line (20, 120, 220, 320) comprising:

   a main channel (21, 121, 221, 321) able to transport a cryogenic fluid,
   a plurality of secondary channels (22, 122, 222, 322) parallel to and disposed on the periphery of an external perimeter of the main channel (21, 121, 221, 321) and which are discontinuous.

2. The cryogenic turbopump feed line (20, 120) according to claim 1, wherein the plurality of secondary channels (22, 122) are disposed around the main channel (21, 121).

3. The cryogenic turbopump feed line (220, 320) according to claim 1, wherein the plurality of secondary channels (222, 322) are disposed partially around the main channel (221, 321).

4. The feed line according to any one of claims 1 to 3, wherein in cross-section, at least one portion of a contour passing through the centers of the plurality of secondary channels (22, 122) has a ratio (R) between the length of the at least one portion of the contour not crossing a secondary channel to the total length (L) of the at least one portion of the contour less than 40%, preferably less than 25%.

**5.** The feed line according to any one of claims 1 to 4, having connecting radial orifices (24) between the primary (21, 121) and secondary (22, 122) channels.

**6.** The feed line according to any one of claims 1 to 5, wherein the plurality of secondary channels (22, 122) is opening out onto at least one of an upstream end and a downstream end of the line (20, 120).

**7.** The feed line according to any one of claims 1 to 6, wherein the main channel (21, 121) and the plurality of secondary channels (22, 122) are separated by a strip of thickness (a) less than 3 mm, preferably less than 2 mm.

**8.** The feed line according to any one of claims 1 to 7, wherein the secondary channels (22, 122) have a substantially circular cross-section.

**9.** The feed line according to any one of claims 1 to 8, wherein a cross-section of the main channel (21, 121) has a surface between 50 mm$^2$ and 700 mm$^2$, preferably between 75 mm$^2$ and 450 mm$^2$, perpendicularly to a flow direction.

**10.** The feed line according to any one of claims 1 to 9, wherein a gap (b) between two successive secondary channels (22, 122) in the vicinity of an element of a contour of the main channel (21, 121) with no ridges is less than 3 mm, preferably 2 mm.

**11.** The feed line according to any one of claims 1 to 10, wherein the main channel (21) has a substantially circular cross-section.

**12.** The feed line according to any one of claims 1 to 11, wherein the main channel (121) has a cross-section in the shape of a water drop, with a base having substantially the shape of an arc of a circle with two ends from which two joining segments extend.

**13.** The feed line according to any one of claims 1 to 12 wherein an insulating material is provided in the secondary channels (22, 122).

**14.** The feed line according to claim 13 wherein the insulating material is a special epoxy resin for cryogenic applications.

**15.** A method for manufacturing the feed line according to any one of claims 1 to 14, having at least one manufacturing step by an additive manufacturing method.

[Fig. 1]

[Fig. 2]

[Fig. 3]

[Fig. 4A]

[Fig. 4B]

[Fig. 5A]

[Fig. 5B]

[Fig. 5C]

[Fig. 5D]

[Fig. 6]

[Fig. 7]

[Fig. 8A]

[Fig. 8B]

[Fig. 9]

[Fig. 10]

[Fig. 11]

**EP 4 136 376 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2730831 A1